(19) Europäisches Patentamt
European Patent Office
Office européen des brevets

(11) EP 0 894 037 B1

(12) EUROPÄISCHE PATENTSCHRIFT

(45) Veröffentlichungstag und Bekanntmachung des Hinweises auf die Patenterteilung:
02.05.2002 Patentblatt 2002/18

(51) Int Cl.7: B23K 11/14, B23K 26/00, E04C 3/10, F16S 1/10

(21) Anmeldenummer: 97906804.6

(22) Anmeldetag: 18.02.1997

(86) Internationale Anmeldenummer:
PCT/EP97/00765

(87) Internationale Veröffentlichungsnummer:
WO 97/30817 (28.08.1997 Gazette 1997/37)

(54) **VERFAHREN ZUR HERSTELLUNG VON LEICHTBAUBÄNDERN ODER LEICHTBAUBLECHEN**

PROCESS FOR PRODUCING LIGHTWEIGHT CONSTRUCTION STRIPS OR LIGHTWEIGHT CONSTRUCTION SHEETS

PROCEDE POUR LA PRODUCTION DE FEUILLARDS LEGERS OU DE TOLES LEGERES

(84) Benannte Vertragsstaaten:
DE ES FR GB IT SE

(30) Priorität: 24.02.1996 DE 19606981

(43) Veröffentlichungstag der Anmeldung:
03.02.1999 Patentblatt 1999/05

(73) Patentinhaber: ThyssenKrupp Stahl AG
47166 Duisburg (DE)

(72) Erfinder:
• BLÜMEL, Klaus
D-46537 Dinslaken (DE)

• BEHR, Friedrich
D-47804 Krefeld (DE)

(74) Vertreter: Cohausz & Florack
Patentanwälte
Kanzlerstrasse 8a
40472 Düsseldorf (DE)

(56) Entgegenhaltungen:
CH-B- 335 772          FR-A- 2 192 229
FR-A- 2 621 677        US-A- 3 805 014
US-A- 3 948 614

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung von coilfähigen Leichtbaubändern oder Leichtbaublechen aus mindestens einem ersten metallischen und einem zweiten metallischen Gegengurt, wobei die Gurte als Blech oder Band ausgebildet sind und durch elektrische Widerstandsschweißung miteinander verbunden werden.

Leichtbauflächenelemente der voranstehend genannten Art sind bereits in der WO-A-96/23621 (Stand der Technik gemäß Art. 54(3) EPÜ) vorgeschlagen worden. Bei diesen Leichtbauflächenelementen handelt es sich um Doppellagenbleche, welche aus einem Ober- und einem Unterblech bestehen, wobei eines der Bleche aus ihm herausgeformte Noppen aufweist und die Noppen mit einem glatten Gegenblech oder Band verschweißt sind. Das Doppellagenblech ist coilfähig und besitzt bei Einhaltung bestimmter Noppenabstände Vorteile im Hinblick auf sein Gewicht gegenüber Blechen aus Vollmaterial bei gleichzeitig hoher Druck-, Biegeund/oder Knickbelastbarkeit.

Es hat sich herausgestellt, daß die Herstellung des voranstehend erläuterten Doppellagenbleches nur unter Schwierigkeiten durchführbar ist. Durch die Begrenzung der Anpreßkraft der Elektroden beim Schweißen der Noppen gegen das glatte Gegenblech bildet sich ein erhöhter elektrischer Widerstand zwischen den Elektroden und den in der Regel verzinkten Blechen aus. Die Anpreßkraft kann jedoch nicht beliebig erhöht werden, weil bei einer zu starken Erhöhung die einzelnen Noppen eingeebnet werden.

Dadurch wird auch die Kühlung der Schweißpunkte gegenüber der üblichen Buckelschweißung verringert. Der gegenüber der üblichen Buckelschweißung erhöhte elektrische Widerstand bei verringerter Kühlung führt zu einer erhöhten Zinkverdampfung und damit einhergehend zu einem erhöhten Zinkauftrag auf der Elektrodenfläche, wobei sich dieser Effekt unabhängig davon einstellt, ob Rollenelektroden, Platten- oder Leistenelektroden verwendet werden. Durch den erhöhten Zinkauftrag wird wiederum die Kühlung vermindert und der elektrische Widerstand erhöht. Der erhöhte elektrische Widerstand verursacht zusätzlich die Häufigkeit von Brandmarken auf der Elektrode, deren thermische Belastung und die Bildung von Schweißspritzern, die bis zur Bildung von Löchern im Gurt führen können.

Es ist Stand der Technik, den Zinkauftrag auf der Elektrode durch rollengeführte Messer abzustreifen oder abzubürsten und dann, wenn Risse im Hartkupfer der Elektroden festgestellt werden, die Elektrode spanabhebend zu bearbeiten.

Desweiteren ist aus der US-A-3948614 eine Verbundmetallverkleidung und ein Verfahren zu deren Herstellung bekannt. Dabei wird die Verbundmetallverkleidung durch ein Verbinden einer Metallplatte mit einer erhabenen, rippenaufweisenden Metallplatte hergestellt, wobei die Platte, nachdem sie auf die erhabenen Rippen gelegt wurde, mit diesen verschweißt wird. Die erhabenen Rippen sind rechteckig und damit scharfkantig ausgestaltet, so daß sie weder warm- noch kaltgewalzt werden können. Derartige Rippen können nur als Feinguß hergestellt werden. Die bekannte Verbundverkleidung kann somit nur durch einen erhöhten Aufwand, nämlich den zusätzlichen Vorgang des Feingießens der Rippen, hergestellt werden.

Die schweizerische Patentschrift CH-A-335772 beschreibt ein Verfahren zur Herstellung einer Schweißverbindung durch Widerstandsschweißen und eine nach dem Verfahren hergestellte Schweißverbindung. Um bei dem Widerstandsschweißen eine bessere Schweißnaht mit geringem Stromverbrauch zu erzielen, werden an der Schweißstelle der beiden aufeinander zu verschweißenden Metallteile Vorsprünge in der Form von einer Reihe linienförmiger Erhöhungen vorgesehen, und zwar derart, daß beim Aufeinandersetzen der Teile in der Schweißstellung die Erhöhung des einen Teils diejenige des anderen Teils kreuzen.

Schließlich ist aus der französischen Patentanmeldung 2621677 ein metallisches Leichtbauflächenelement sowie ein Verfahren zu dessen Herstellung bekannt. Bei diesem Leichtbauflächenelement wird ein mittels eines Tiefziehverfahrens mit wabenförmigen Zellen versehenes Blech mit einem glatten Blech verbunden. Die Herstellung von wabenförmigen Zellen mittels eines Tiefziehverfahrens ist jedoch ein kompliziertes Verfahren, das zu einem erhöhten Produktionsaufwand führt.

Die Aufgabe der Erfindung besteht darin, den Elektrodenverschleiß bei der Herstellung von Leichtbauflächenelementen der eingangs erläuterten Art wesentlich zu senken und die Bildung von Schweißspritzern weitgehend zu vermeiden.

Diese Aufgabe wird erfindungsgemäß dadurch gelöst, daß auf einer der beiden Seiten des ersten Gurtes regelmäßig sich wiederholende, massiv ausgebildete Erhebungen durch einen Kalt- oder Warmwalzvorgang erzeugt werden, und daß diese Erhebungen mit einer der beiden Seiten des zweiten Gurtes verschweißt werden, derart, daß die entstehenden Schweißperlen jeweils einen Durchmesser aufweisen, welcher in Abhängigkeit von der Dicke des jeweiligen Gurtes 1 bis 5 mm beträgt.

Die Erfindung sieht vor, die Erhebungen nicht, wie bei den eingangs beschriebenen Doppellagenblechen durch hohle Noppen zu bilden, sondern aus Vollmaterial zu formen. Auf diese Weise kann der Anpreßdruck der Elektroden wesentlich erhöht werden.

Es wurde weiterhin gefunden, daß sich die notwendigen Erhebungen mit Hilfe einer Warmwalzung nach Art der Herstellung von Tränenblechen herstellen lassen. Wenn beide Gurte als Tränenbleche hergestellt werden, ein Gurt um 180° in Walzrichtung geklappt und positioniert wird, kann man die jeweiligen Tränenpaare übereinander anordnen und z. B. mit einer Gleichstrom-Rollnaht-Maschine oder einer Schweißmaschine nach Art derer die zur Herstellung von "Schweißgittern" verwendet werden, verschweißen. Natürlich können auch längsgestrecktere, z. B. W-förmig angeordnete oder durchgängige, quer zur Walzrichtung verlaufende Erhebungen als Tränenersatz verwendet werden.

Vorzugsweise weisen die Tränenerhebungen eine Oberflächenkrümmung auf, um Schweißperlen mit Durchmessern von 1 - 5 mm zu erzeugen. Tränenbleche lassen sich durch Warmwalzen z. Z. nur bis zu einer minimalen Materialdicke von ca. 1,2 mm mit Tränenhöhen von bis zu ca. 2,5 mm walzen. Der Einsatz eines Double Rollers oder Single Rollers zur Herstellung von Tränenblechen ist zumindest bei Stahl als Material der Wahl derzeit nicht zu erwarten, weil zur Erreichung einer hohen Stahlqualität eine nachfolgende Umformung nötig ist, die nur mit einer synchron laufenden, nachfolgenden Umformung erfolgen kann.

Allerdings ist es erfindungsgemäß möglich nur einen Gurt als Tränenblech gewalzt gegen ein als Glattblech oder Glattband ausgebildeten Gegengurt zu verschweißen, dessen Dicke z. B. kleiner ist, als die minimale Dicke des Tränenbleches. Auf diese Weise erhält man ein Leichtbauelement, dessen Beul- und Knicksteifigkeit wesentlich höher ist, als die eines gleich schweren Bleches aus Vollmaterial.

Vorteilhafterweise sollte der Gegengurt als Zuggurt im eingebauten Zustand angeordnet sein. Diese Form eignet sich besonders für den Kran- und Fahrzeugbau als Träger und Beplankung sowie als Decksplanke für den Schiffsbau.

Für die Herstellung von Bauelementen der Karosserie von PKW's sind dünnere Abmessungen nötig, die durch Warmwalzen z. Z. nicht herstellbar sind.

Es ist nun weiterhin erfindungsgemäß, nach Art der altbekannten Technik des Blockwalzens vorzugehen. Beim Blockwalzen werden sogenannte "erhobene und versenkte Haue" kaltgewalzt, um die Bandanfänge in das Gerüst einziehen zu können. Diese "erhobenen und versenkten Haue" bilden sich wiederholend auf der Bandlänge ab. Analog schlägt nun die Erfindung auf Basis dieser alten Technik vor, eine Art einseitige Wellung im wesentlichen quer zur Walzrichtung in einen Gurt kalt einzuwalzen, wobei die Wellenberge nach der in Anspruch 9 angegebenen Lehre einen Abstand von ca. 8 - ca. 40 mm aufweisen.

Lt. Anspruch 6 wird vorgeschlagen, statt eines Blockwalzgerüstes ein Quartogerüst für eine größere Bandbreite gegenüber der eines Blockgerüstes zu verwenden, in dem eine Stützwalze mit komplementärer Oberflächenform in die oberflächenstrukturierte Arbeitswalze eingreift und das Gegenwalzenpaar mit glatten, zylindrischen Flächen ausgestattet ist.

Wird ein Gegenband mit Breite des ersten Bandes zerstückelt, um 90° gedreht und mit einer Umklappung von 180° auf ein zweites, einseitig profiliertes Band gelegt, ergeben sich Schnittpunkte der Erhebungen, die sich z. B. per Widerstandsschweißung verbinden lassen.

Um möglichst geringen Verschnitt beim Ausschneiden der Tiefziehplatinen zu erzeugen, erscheint es günstig, die Bandstücke um jeweils 90° gedreht mit Hilfe einer z. B. Laser-Coil-Schweißanlage zu einem neuen Band zu verbinden, und erst dann die 180°-Klappung und Verschweißung mit dem Gegenband an den Kreuzungspunkten der Erhebungen vorzunehmen.

Beim Verschweißen des ersten Gurtes mit dem Gegengurt sollten Schweißperlendurchmesser, in Blechebene gemessen, entstehen, die ein Ausknöpfen des Bleches ermöglichen. Dazu erscheinen Schweißperlendurchmesser von mehr als 1 mm Durchmesser, an 0,2 mm dicken Gurten, bis hin zu mehr als 5 mm Durchmesser an 2 mm dicken Gurten als günstig, auch in Bezug auf die erreichbare Schweißgeschwindigkeit.

Es wurde nun weiterhin eine technische Regel zu Auslegung der Abstände der Erhebungen auf Basis einer Knicklast und Beulbeanspruchung gefunden. Danach sollte der kleinste in einem Gurt auftretende Abstand 1 zwischen zwei Verbindungsschweißperlen

$$0,1 \cdot \Delta S/c \cdot L \leq 1 \leq 0,3 \cdot \Delta S/c \cdot L$$

betragen, mit L als der überspannten Länge des Bauteiles, $\Delta S$ als der geringsten auftretenden Blech-(Gurt)-dicke und C als dem Abstand der neutralen Faser des Flächenträgheitsmomentes des Schnittes durch das Doppellagenblech bis zur Blech-(Gurt)-Außenkante.

Es wurde nun eine Methode gefunden, mit der sich aus einem Leichtbaublech der geschilderten Art besonders günstig tiefgezogene Bauteile herstellen lassen, indem zwischen den Blechlagen eine Masse geringer Dichte und möglichst hoher Druckfestigkeit angeordnet wird. Diese Masse muß zusätzlich über die Eigenschaft verfügen, daß sie bei einer Punktschweißung schnell und rückstandsarm verdampfen oder verbrennen kann. Die Druckfestigkeit wird benötigt, um einen Mindestabstand der Gurte in umgeformten Bereichen zu gewährleisten. Die schnelle und rückstandsarme Verdampfung und/oder Verbrennung gewährleistet, daß aus der Füllmasse möglichst wenig Kohlenstoff von der Schweißperle aufgenommen wird.

Als bisher geeigneteste Masse hat sich in Versuchen Papier aus Baumwolle erwiesen. Es besteht aus Zellulosefasern, die hohl sind, eine hohe Druckfestigkeit aufweisen. Dabei besitzt das Papier eine geringe Dichte von ca. 0,4 - 0,5 $gr/cm^3$. Es kann z. B. mit Hilfe von Spuren von "Kupferkalk" ($CuSO_4 \cdot 3 \cdot Cu (OH)_2$ x $H_2O$ im Gemisch mit Brandkalkmilch) schimmelbeständig, chlorionenfrei und recyclebar imprägniert werden (Cu ≤ 1 0/00-Gewicht). Zusätzlich kann es mit einer für Gewebe üblichen "Ausrüstung" wasserabweisend ausgestattet werden.

Besonders günstig erscheint es aber, als Ausrüstung eine viskoelastische Masse aus z. B. Bitumen oder Typ "teilpolymerisiertes Acrylpolymer" zu verwenden, welche ca. 40 % Vol. des Papieres einnimmt und bei 20° unter Druck fließfähig ist. Das Papier wird mit Schlitzen für die Tränen durch Ausstanzen versehen, im erwärmten Zustand beidseitig ausgerüstet oder imprägniert unter Anwendung eines Lösungsmittels und zwischen den Gurten des Leichtbauelementes angeordnet, so daß die Erhebungen der Gurte aufeinanderliegen. Dabei soll erfindungsgemäß diese Gesamtfüllmasse nur bis 80 % des Hohlraumvolumens einnehmen, um Schweißgase abführen zu können. In einem Arbeitsgang mit dem Verschweißen der Kreuzungspunkte der Erhebungen kann nun der Rand des Leichtbaubandes durch zwei Walzenpaare dicht zusammengepreßt werden unter plastischer Verformung der Erhebungen. Auf diese Weise braucht das Leichtbauband an den Innenflächen nicht verzinkt zu sein, auch nicht phosphatiert u. ä., denn beim Ausschneiden der Platinen kann durch einen Niederhalter im Werkzeug ebenfalls ein dichter Randbereich hergestellt werden. Eine Abdichtung tritt auch beim Tiefziehen ein in gestauchten Bereichen des geformten Bauteiles und am Bauteilflansch durch den Niederhalter des Besäumschnittes. Beide Gurte können auch aus nichtrostendem Stahl oder beidseitig verzinktem Stahl bestehen. Aufgrund der Fernwirkung des Zinks ist auch ein Leichtbauelement denkbar, von dem ein Gurt beidseitig, der andere nur einseitig verzinkt ist.

Es ist auch möglich, als Füllmasse Zellulose mit Bitumen oder Harz, Aluminium- oder Kunststoffschaum bzw. Matten aus Kunststofffasern zu verwenden. Diese Technik läßt sich natürlich auch auf das eingangs genannte Doppellagenblech anwenden.

Die Verzinkung der Gurtinnenseiten kann vermieden werden, wenn der Füller aus einer dauerhaft und dicht klebenden Masse besteht.

Es wurde nun weiterhin gefunden, daß flächige Bauteile, die nach dem Stand der Technik mit Verstärkungsblechen verschweißt werden, sofern sie einer besonderen Biegelast ausgesetzt sind, sich mit Hilfe eines Schweiß-Verbundes aus dem erfindungsgemäßen Leichtbaublech mit einem Noppenblech besonders gewichtssparend herstellen lassen. Dazu wird das aus Leichtbaublech hergestellte, zur Endkontur geformte Bauteil auf der Zugseite mit einem genoppten Blech versehen, wobei die Noppen im PKW-Karosseriebau z. B. eine Höhe von 3 bis 15 mm und Noppenabstände von z. B. 30 bis 150 mm aufweisen, die Noppenhöhen an der Stelle des höchsten Biegemomentes am höchsten sind und zum Rand der Verstärkung hin auf Null abnehmen. Der Rand wird nach Möglichkeit vollständig umlaufend laser- oder widerstandsgeschweißt gegen den Untergurt, die Noppenspritzen so breit ausgebildet, daß zumindest eine Schweißperle des Leichtbaubleches von den Elektroden einer Punktschweißvorrichtung erfaßt wird.

Versuche haben aber gezeigt, daß die Erfassung einer Schweißperle nicht zwingend ist. Eine Mehrlagenschweißung ist mit den Leichtbaublechen ohne Probleme durchführbar.

Die Stelle des Schweißpunktes wird trotz Zwischenlage eines Baumwollpapiers über den Nebenschluß der in der Nähe befindlichen Schweißperlen so schnell heiß, daß das Papier samt seiner "Ausrüstung" ruckartig verdampft und/oder verbrennt und Rußränder nur außerhalb des Bereiches der späteren Punktschweißung gefunden werden. Eine Punktschweißung am Leichtbaublech dauert nicht länger, als die von drei gleich dicken Blechen ohne Papierlage.

Die heute üblichen Anforderungen an die Außenhautqualität eines PKW sind mit dem erfindungsgemäßen Leichtbaublech nicht erfüllbar, weil nach dem Tiefziehen die Schweißperlen trotz Lackierung sichtbar bleiben. Deshalb schlägt die Erfindung im weiteren vor, die Außenhautseite einer Leichtbauplatine im ebenen Zustand mit einem Glattblech zu überkleben, die Platine dann insgesamt umzuformen. Auf diese Weise ist eine glatte und gegen Hagelschlag genügend stabile Oberfläche erzeugbar.

Um im Fall der Herstellung der einseitigen Erhebungen aus Stahl durch einen Warmwalzprozeß ein gleichmäßig feinkörniges Gefüge zu erhalten, kann es zweckmäßig sein, den Warmwalzprozeß bis in das Ferritgebiet zu fahren und anschließend ein Rekristallisationsglühen im Schutzgas oder Teilvakuum auszuführen.

Die hier gefundene Form eines Leichtbauelementes bietet gegenüber der des Doppellagenbleches einen weiteren Vorteil. Durch Anordnung der Erhebungen "erstes Blech oder Band/Gegenblech" mit einem Kreuzungswinkel von 90 ° ist es möglich, mehrere Hybrid-Schweißköpfe in Richtung der und auf der Gegenseite der Erhebungen des Gegenbleches anzuordnen, die Position der Erhebungen des ersten Bandes laufend mit einer optischen Einrichtung zu vermessen und dementsprechend die Schweißköpfe gepulst an- und abzuschalten. Vorzugsweise besteht ein Hybridschweißkopf aus einer WIG-Quelle und einem durch eine Glasfaser zugeführter Laserstrahl (Nd: YAG), wobei der Laserstrahl durch das Inertgas des WIG-Brenners hierdurch auf der Metalloberfläche ein elektrisch leitfähiges Plasma erzeugt und der Stromüberschlag der WIG-Elektrode daraufhin erfolgt. Auf diese Weise braucht nur der Laser gepulst werden, an der WIG-Elektrode liegt eine konstante Spannung während der Aus-Taktzeit an. Es ist so eine berührungslose Schweißung möglich, wobei der erste Gurt gegen den Gegengurt, z. B. mit Hilfe von Kegelrädern oder dünnen Radscheiben, gedrückt wird oder beide über eine Rolle mit einer Krümmung, die von der WIG-Elektrode abgewendet ist, per Haspelzug gezogen werden.

Es wurde nun weiterhin gefunden, daß das Elektroden-Standzeitproblem aufgrund der Zinkschichten auch ohne Lasertechnik besonders preiswert lösbar ist, indem man den folgenden Verfahrensgang mit unverzinktem als Tränenband ausgebildeten Gurt und einem entsprechenden Gegengurt ausführt:

1. Entweder Beschichtung der späteren Innenflächen der Bandlagen mit einem teilpolymerisierten Acryl mit einer Dicke, die in Summe etwa 30 - 40 % Vol. des Hohlraumes (Spaltes) entspricht, Einlegen von gelochtem Papier,

oder

Einlegen von einer gelochten Lage aus mit Bitumen (PO CB) infiltriertem ataktischem Polypropylen oder einem anderen Fasermaterial wie Glasgittervlies, Glashohlkugeln mit einer Dichte von z. B. 0,1 - 0,2 g/cm³, Glasfasern, besser, weil leichter, aus Baumwollpapier unter vollständiger Füllung des Hohlraumes (10 - 20 % Vol. Resthohlraum);

2. Schweißen der Kontaktpunkte mit einer Roll- oder Leistenelektrode unter Einsparung von ca. 30 % elektrischem Strom im Vergleich zur Verschweißung von verzinkten Bändern,

3. mit 2. gleichzeitiges Dichtwalzen zumindest der Coilkanten in einer Breite von 20 - 40 mm bei einer Temperatur von ca. 160 - 220 °C,

4. Elektrolytische Verzinkung nur der Außenflächen des Leichtbaubandes;

5. Alkalische Reinigung, Spülung mit Wasser, Aktivierung, Phosphatierung, Spülung, Nachpassivierung, Tauchgrundierung, kathodische Elektrotauchlackierung, Lackeinbrennen nach Herstellung und Einbau der Leichtbauteile.

Nachfolgend wird die Erfindung anhand einer Ausführungsbeispiele dargestellenden Zeichnung näher erläutert:

Fig. 1 ein Leichtbauband in einer teilweisen perspektivischen Ansicht;

Fig. 2 ein Vier-Walzengerüst in seitlicher, schematischer Ansicht;

Fig. 3 eine alternative Ausführungsform eines Leichtbauelements in einer Schnittansicht;

Fig. 4 ein herkömmliches Tränenblech in einer ausschnittsweisen Draufsicht.

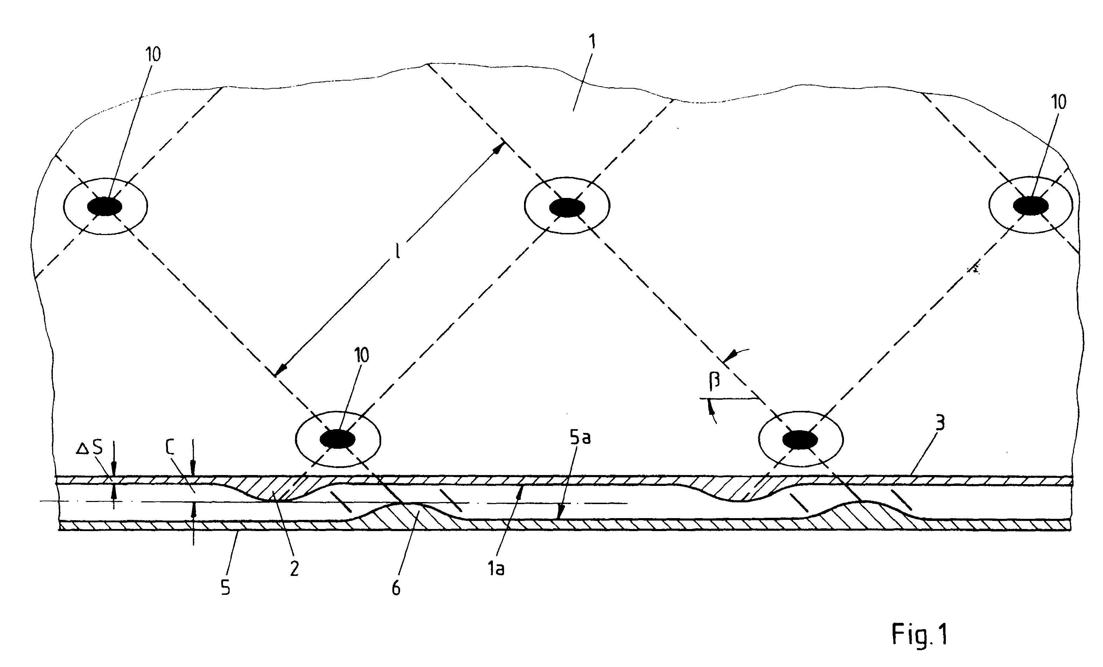

Das in Fig. 1 gezeigte Leichtbauband weist einen Obergurt 1 auf, der durch ein Stahlband gebildet ist. Dieser Obergurt 1 ist auf seiner unteren Oberfläche 1a mit Erhebungen 2 versehen, welche bezogen auf den Rand 3 des Leichtbaubandes in einem Winkel β von 45° verlaufen.

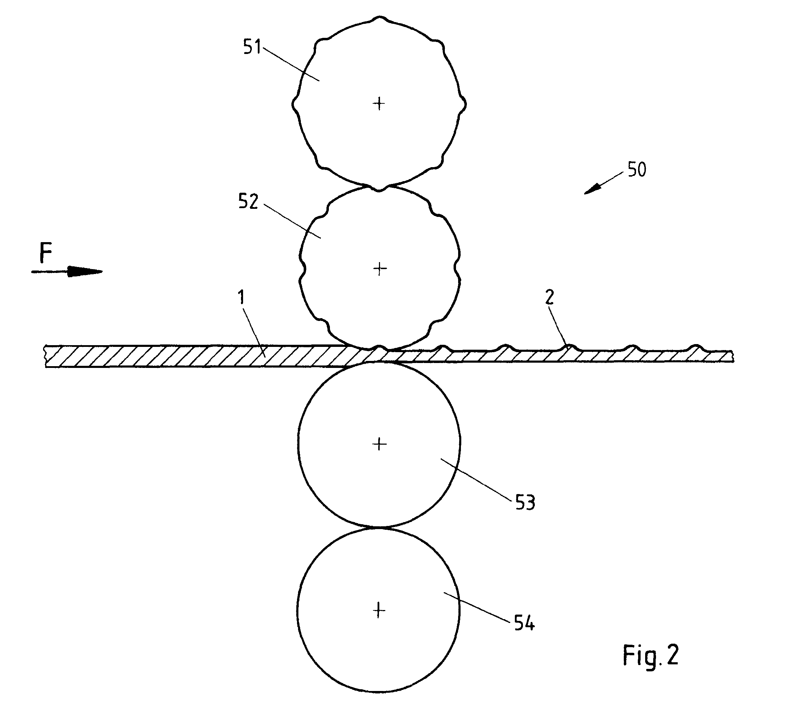

Um die Erhebungen 2 aus dem vollen Material des Obergurtes 1 zu bilden, ist der Obergurt 1 beispielsweise in einem Vier-Walzengerüst 50, wie es in Fig. 2 gezeigt ist, einer Walzbearbeitung unterzogen worden.

Bei dem in Fig. 2 gezeigten Vier-Walzengerüst 50 kämmen die beiden Walzen 51, 52 des oberen Walzenpaares während die Walzen 53, 54 des unteren Walzenpaares eine glatte Oberfläche aufweisen. Auf diese Weise erhält das Stahlband 1 beim Durchlaufen des Walzgerüsts 50 auf seiner den Arbeitswalzen 51, 52 zugewandten Oberfläche quer zur Förderrichtung F verlaufende, sich über die Breite des Bandes 1 erstreckende Erhebungen 2.

In gleicher Weise wie der Obergurt 1 des in Fig. 1 gezeigten Leichtbauelements ist auch dessen Untergurt 5 aus einem mit Erhebungen 6 versehenen Stahlband gebildet. Indem der Obergurt 1 und der Untergurt 5 derart versetzt aufeinander gelegt werden, daß die Erhebungen 2, 5 auf den einander zugeordneten Oberflächen 1a, 5a des Obergurts 1 bzw. des Untergurts 5 einander unter einem Winkel β von 90° schneiden, berühren sich die Erhebungen 2, 6 in Berührungspunkten 10. Der Abstand 1 zwischen diesen Berührungspunkten 10 bemißt sich nach der in Anspruch 9 angegebenen Regel in Abhängigkeit von der geringsten Blechdicke ΔS des Obergurtes 1 bzw. des Untergurtes 5 und dem Abstand C zwischen der neutralen Faser des Flächenträgheitsmomentes des Schnittes durch das Leichtbauelement bis zu dessen Blechaußenkante.

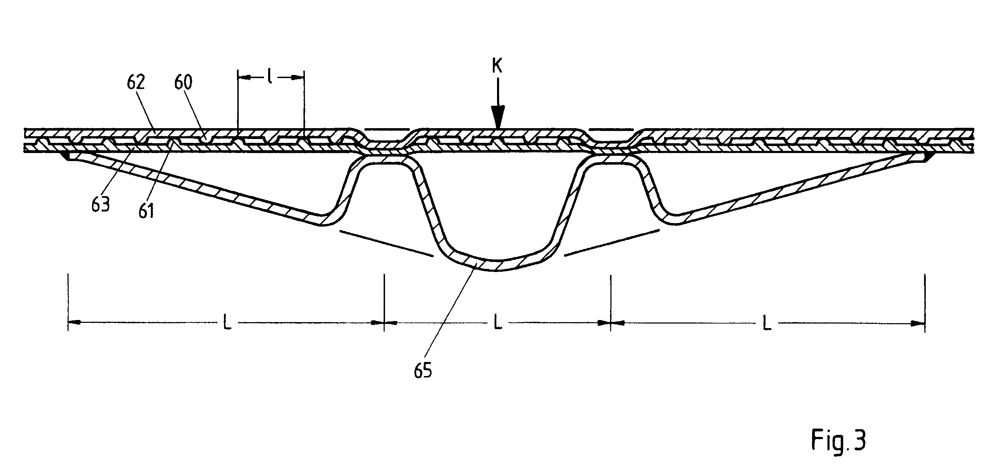

In Fig. 3 ist eine mögliche Variante der Verwendung eines mit Erhebungen in der erfindungsgemäßen Weise versehenen Bleches gezeigt. Bei dem in Fig. 3 dargestellten Leichtbauelement liegen die einzelnen Erhebungen 60, 61 des jeweiligen Ober- bzw. Untergurtes 62 bzw. 63 nicht aufeinander auf, sondern sind jeweils ineinandergreifend verschweißt. Dies ist insbesondere dann vorteilhaft, wenn z. B. durch eine Verstärkung mit Hilfe eines genoppten Zuggurtes 65 kurze überspannte Längen L vorgegeben werden können. Durch Wahl der Blechdicken, Höhen und Abstände der Erhebungen und der Länge L läßt sich jedes Bauteil auf den jeweiligen Belastungsfall (hier Biegung einer Platte durch die Kraft K) optimieren; so daß mit einem einzigen Walzenpaar auch Leichtbauelemente hergestellt werden können, deren Länge L verdoppelt und deren Abstand C zwischen der neutralen Faser des Flächenträgheitsmoments des Schnitts durch das Doppellagenblech bis zur Blechaußenkante vergrößert ist, indem die Erhebungen 60, 61 beider Gurte 63, 64 kreuzend angeordnet sind.

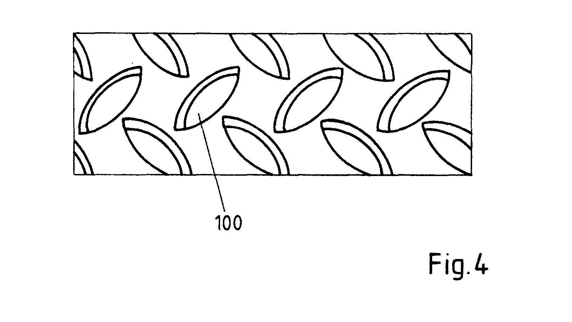

Fig. 4 zeigt schließlich ein herkömmliches, durch Warmwalzen hergestelltes Blech mit tränenförmigen Erhebungen 100. Ein solches Blech kann bei der Herstellung von Leichtbauelementen gemäß dem erfindungsgemäßen Verfahren eingesetzt werden. Gemäß der Erfindung können die einzelnen Erhebungen in Tränenform aber auch W-förmig quer oder längs zur Walzrichtung angeordnet sein. Es sind bei besonderen geforderten Umformeigenschaften auch Strukturierungen möglich, die z. B. Kreisringe oder hohle Sechsecke in der Draufsicht bilden. Im Unterschied zu dem in Fig. 4 gezeigten herkömmlichen "Tränenblech" sind die Erhebungen zur Herstellung eines Leichtbauelementes nach dem erfindungsgemäßen Verfahren jedoch in wesentlich größeren Abständen als bei den herkömmlichen Tränenblechen anzuordnen.

**Patentansprüche**

1. Verfahren zur Herstellung von verzinkten, coilfähigen und tiefziehfähigen Leichtbaubändern oder Leichtbaublechen aus mindestens einem ersten metallischen Gurt (1) und einem zweiten metallischen Gurt (5), wobei die Gurte (1, 5) als Blech oder Band ausgebildet sind und durch elektrische Widerstandsschweißung miteinander verbunden werden, wobei auf einer der beiden Seiten (1a) des ersten Gurtes (1) regelmäßig sich wiederholende, massiv ausgebildete Erhebungen (2) durch einen Kalt- oder Warmwalzvorgang erzeugt werden, und wobei diese Erhebungen (2) mit einer der beiden Seiten (5a) des zweiten Gurtes (5) verschweißt werden, derart, daß die entstehenden Schweißperlen jeweils einen Durchmesser aufweisen, welcher in Abhängigkeit von der Dicke des jeweiligen Gurtes 1 bis 5 mm beträgt.

2. Verfahren nach Anspruch 1, **dadurch gekennzeichnet, daß** der Gegengurt (5) eine glatte Oberfläche aufweist.

3. Verfahren nach Anspruch 1, **dadurch gekennzeichnet, daß** der Gegengurt (5) mindestens auf derjenigen seiner Oberflächen (5a), welche der mit den sich wiederholenden Erhebungen (2) versehenen Oberfläche (1a) des ersten Gurtes (1) zugeordnet ist, ebenso angeordnete und einseitig aufgewalzte Erhebungen (6) aufweist.

4. Verfahren nach einem der voranstehenden Ansprüche, **dadurch gekennzeichnet, daß** die Erhebungen (2, 6) durch einen Warmwalzvorgang nach Art des Walzens von Tränenblechen erzeugt werden.

5. Verfahren nach einem der Ansprüche 1 bis 3, **dadurch gekennzeichnet, daß** die Erhebungen (2, 6) durch einen Kaltwalzvorgang erzeugt werden und daß die Erhebungen (2, 6) im wesentlichen quer zur Walzrichtung (F) angeordnet sind.

6. Verfahren nach Anspruch 5, **dadurch gekennzeichnet, daß** ein Quarto-Gerüst verwendet wird, bei dem ein Walzenpaar (51, 52) miteinander kämmt, welches aus einer Erhebungen und Vertiefungen aufweisenden Arbeitswalze (52) und einer entsprechende Erhebungen und Vertiefungen aufweisenden Stützwalze (51) gebildet ist.

7. Verfahren nach Anspruch 3 und nach den Ansprüchen 5 oder 6, **dadurch gekennzeichnet, daß** der Gegengurt (5) in Stücke zerschnitten wird, daß die Stücke um 180° geklappt und um 90° zur Walzrichtung (F) gedreht werden und daß die sich dann unter einem Winkel (β) von annähernd 90° überschneidenden Erhebungen (2, 6) beider Gurte (1, 5) miteinander verschweißt werden.

8. Verfahren nach Anspruch 7, **dadurch gekennzeichnet, daß** aus den Stücken des Gegengurts (5) vor der Verschweißung mit dem ersten Gurt (1) ein neues Gegenblech bzw. ein neuer Gegengurt durch ein Verschweißen nach Art der "Taylored blanks", insbesondere nach Art des "Coilschweißens", hergestellt wird, und daß die Erhebungen des neu hergestellten Gegengurtes in Walzrichtung des ersten Bleches oder Bandes verlaufen.

9. Verfahren nach einem der voranstehenden Ansprüche, **dadurch gekennzeichnet, daß** der kleinste meßbare Abstand 1 zwischen zwei der Verbindungsschweißperlen

$$0,1 \ x \ \Delta S/C \ x \ L \le 1 \le 0,3 \ x \ \Delta S/C \ x \ L$$

beträgt, wobei mit L eine von dem Leichtbauband oder Leichtbaublech überspannte Länge, mit $\Delta S$ die geringste auftretende Gurtdicke und mit C der Abstand der neutralen Faser des Flächenträgheitsmomentes des Schnittes des Leichtbaubandes oder Leichbaubleches bis zu dessen Gurtaußenkante bezeichnet ist.

10. Verfahren nach einem der voranstehenden Ansprüche, **dadurch gekennzeichnet, daß** zwischen dem ersten Gurt (1) und dem Gegengurt (5) vor dem Verschweißen eine Zwischenlage aus einer Masse angeordnet wird, welche eine Dichte von weniger als 1 $g/cm^3$ aufweist, welche wasserabstoßend und nicht schimmelnd ist, und welche bei der Verschweißung im wesentlichen rückstandslos verdampft.

11. Verfahren nach Anspruch 10, **dadurch gekennzeichnet, daß** die Zwischenlage überwiegend aus imprägnierter Zellulose besteht, welche wasserabweisend ausgerüstet ist.

12. Verfahren nach einem der voranstehenden Ansprüche, **dadurch gekennzeichnet, daß** auf diejenige Oberfläche des Leichtbaubandes bzw. des Leichtbaubleches, welche zukünftig die Außenseite eines aus dem Leichtbauband bzw. Leichtbaublech hergestellten Bauteils bildet, ein glattes Band bzw. Blech geklebt wird, welches nach dem Platinenzuschnitt gemeinsam mit dem Leichtbauband bzw. Leichtbaublech zur Endgeometrie des Bauteils umgeformt wird.

**13.** Verfahren nach einem der voranstehenden Ansprüche, **dadurch gekennzeichnet, daß** der erste Gurt (1) und der Gegengurt (5) aus Stahl bestehen und daß folgende Herstellungsschritte durchlaufen werden:

a) Walzen der einseitigen Erhebungen,
b) Glühen,
c) elektrolytische Verzinkung,
d) Übereinanderlegen des ersten Gurtes mit dem Gegengurt unter Bildung von Kreuzungspunkten der Erhebungen und unter Einfügen einer Füllmasse in die sich bildenden Hohlräume,
e) Schweißen der Erhebungs-Kreuzungspunkte,
f) Phosphatieren und / oder Chromatieren, Trocknen, Ölen,
g) Aufcoilen oder Abtafeln,
h) Umformen
i) Entölen, Grundieren, Lackieren.

**14.** Verfahren nach Anspruch 13, **dadurch gekennzeichnet, daß** die Erhebungen (2, 5) im Schritt a) durch Warmwalzen bis in das Ferritgebiet hergestellt werden und daß in Schritt b) ein Rekristallisationsglühen, insbesondere unter Schutzgas oder im Vakuum, durchgeführt wird.

**15.** Verfahren nach einem der Ansprüche 13 oder 14, **dadurch gekennzeichnet, daß** die sich zwischen dem ersten Gurt (1) und dem Gegengurt (5) bildenden Hohlräume unvollständig insbesondere bis zu 80% ihres Volumens durch die Füllmasse gefüllt sind.

**16.** Verfahren nach einem der Ansprüche 13 - 15, **dadurch gekennzeichnet, daß** in dem Fall, daß im Arbeitsschritt h) das Leichtbauband von einem Coil abgenommen wird, dem Umformen der Arbeitsschritt des Richtens vorgeschaltet und die Arbeitsschritte des Platinenschneidens und Besäumens nachgeschaltet sind.

**17.** Verfahren zur Herstellung eines Bauelements, wobei ein Leichtbauband oder Leichtbaublech durch das Verfahren gemäß Anspruch 2 hergestellt wird, und wobei der glatte Gurt im Einbauzustand durch Zug beaufschlagt ist.

**18.** Verfahren zur Herstellung eines auf Biegung belasteten Bauteils, wobei ein Leichtbaublech oder Leichtbauband durch das Verfarhen gemäß einem der Ansprüche 1 - 16 hergestellt wird, und wobei das Leichtbaublech bzw. das Leichtbauband den Druckgurt bildet und der Zuggurt von einem mit Noppen ausgestatteten und an den Noppenspitzen gegen das Leichtbaublech bzw. das Leichtbauband geschweißten Blech gebildet ist.

**Claims**

**1.** A process for producing galvanised coilable and deep-drawable lightweight strip or lightweight sheet comprising at least one first metallic belt (1) and a second metallic belt (5) with the belts (1, 5) being in the shape of sheet or strip and being connected to each other by means of electrical resistance welding, whereby on one of the two sides (1a) of the first belt (1), regularly recurring solid elevations (2) are created by a cold-rolling operation or a hot-rolling operation, and whereby these elevations (2) are welded together with one of the two sides (5a) of the second belt (5) in such a way that the resulting weld globules comprise a diameter, depending on the thickness of the respective belt, of between 1 mm and 5 mm.

**2.** A process according to claim 1, **characterised in that** the counter-belt (5) comprises a plain surface.

**3.** A process according to claim 1, **characterised in that** the counter-belt (5) at least on those of its surfaces (5a) facing the surface (1a) comprising the repeated elevations (2) of the first belt (1), comprises elevations (6) arranged likewise and rolled-on on one side.

**4.** A process according to one of the preceding claims, **characterised in that** the elevations (2, 6) are generated by a hot-rolling operation of the type used when rolling bulb sheet.

**5.** A process according to one of claims 1 to 3, **characterised in that** the elevations (2, 6) are generated by a cold-rolling operation and that the elevations (2, 6) are essentially arranged transversely to the direction of rolling (F).

**6.** A process according to claim 5, **characterised in that** a four-high stand is used in which a pair of rolls (51, 52) interact which consists of a work roll (52) comprising elevations and indentations and a support roll (51) comprising elevations and indentations.

**7.** A process according to claim 3 and claims 5 or 6, **characterised in that** the counter-belt (5) is cut into pieces; that the pieces are turned over 180° and are rotated by 90° to the direction of rolling (F); and that the resulting elevations (2, 6) intersecting at an angle (β) of nearly 90° of both belts (1, 5), are welded together.

**8.** A process according to claim 7, **characterised in**

**that** from the pieces of the counter-belt (5) prior to welding together with the first belt (1) a new counter-sheet or a new counter-belt is produced by welding in the manner of tailored blanks, in particular in the manner of coil welding, and that the elevations of the newly produced counter-belt are aligned in the direction of rolling of the first sheet or strip.

9. A process according to one of the preceding claims, **characterised in that** the smallest measurable spacing 1 between any two of the contact weld globules is

$$0.1 \cdot \Delta S/C \cdot L \leq 1 \leq 0.3 \cdot \Delta S/C \cdot L$$

with L being the length covered by the lightweight strip or lightweight sheet; $\Delta S$ the smallest occurring belt thickness, and C the spacing between the neutral fibre of the geometrical moment of inertia of the section through the lightweight strip or lightweight sheet to the outside edge of the belt.

10. A process according to one of the preceding claims, **characterised in that** between the first belt (1) and the counter-belt (5) prior to welding, an intermediate layer of a substance is arranged which intermediate layer comprises a density of less than 1 g/cm$^3$, with the substance being water-repellent and mould resistant and which during welding essentially evaporates without leaving any residue.

11. A process according to claim 10, **characterised in that** the intermediate layer predominantly comprises impregnated cellulose, dressed so as to be water-repellent.

12. A process according to one of the preceding claims, **characterised in that** a plain strip or sheet is bonded to that surface of the lightweight strip or lightweight sheet which will later become the outside of a component made from the lightweight strip or lightweight sheet; with the said plain strip or sheet, after cutting of the panel, being formed to the final geometric shape of the component together with the lightweight strip or lightweight sheet.

13. A process according to one of the preceding claims, **characterised in that** the first belt (1) and the counter-belt (5) are made of steel and that the following process steps are passed through:

    a) rolling the one-sided elevations;

    b) annealing;

    c) electrolytic galvanising;

    d) placing the first belt onto the counterbelt so as to form intersections of the elevations, and inserting a filler into the resulting voids;

    e) welding the intersections of the elevations;

    f) phosphatising and/or chromising, drying, oiling;

    g) coiling up or cutting off the sheets;

    h) forming;

    i) de-oiling, priming, painting.

14. A process according to claim 13, **characterised in that** in step a) the elevations (2, 5) are produced by hot rolling into the ferritic range, and that in step b) recrystallisation annealing, in particular in a protective-gas atmosphere or in a vacuum, is carried out.

15. A process according to one of claims 13 or 14, **characterised in that** the voids forming between the first belt (1) and the counter-belt (5) are incompletely filled, in particular that they are filled up to 80 % of their volume, by the filler.

16. A process according to one of claims 13 to 15, **characterised in that** in the case where in process step h) the lightweight strip is taken from a coil, the process step of aligning is to take place before forming, and the process steps of cutting of the sheets and edge trimming are to take place after forming.

17. A process for producing a construction element, with a lightweight strip or lightweight sheet being produced in the process according to claim 2 and with the plain belt in its installed state being under tension.

18. A process for producing a component subjected to bending loads, with a lightweight strip or lightweight sheet being produced by the process according to one of claims 1 to 16, and with the lightweight sheet or lightweight strip forming the pressure belt, and with the tension belt being formed by a metal sheet which comprises burls and which at the tips of the burls is welded to the lightweight sheet or the lightweight strip.

**Revendications**

1. Procédé pour fabriquer des bandes ou tôles de construction allégée galvanisées, bobinables et emboutissables comprenant au moins une première ceinture (1) métallique et une deuxième ceinture (5) métallique, les ceintures (1, 5) étant conçues sous la forme de tôle ou de bande et étant reliées entre elles par soudage électrique par résistance, des éminences (2) se répétant régulièrement et de conception massive étant générées sur l'un des deux côtés (1a) de la première ceinture par une opération de laminage à froid ou à chaud et ces éminences (2) étant soudées avec l'un des deux côtés (5a) de la deuxième ceinture (5), de telle sorte que les perles de soudure qui se forment présentent chacune un diamètre qui est de 1 à 5 mm en fonction de l'épaisseur de chaque ceinture.

2.  Procédé selon la revendication 1, **caractérisé en ce que** la contre-ceinture (5) présente une surface lisse.

3.  Procédé selon la revendication 1, **caractérisé en ce que** la contra-ceinture (5) présente au moins, sur l'une de ses surfaces (5a) qui est associée à la surface (1a), pourvue des éminences (2) qui se répètent, de la première ceinture (1), des éminences (6) disposées de la même manière et laminées sur un côté.

4.  Procédé selon l'une quelconque des revendications précédentes, **caractérisé en ce que** les éminences (2, 6) sont générées par une opération de laminage à chaud à la façon du laminage de tôles larmées.

5.  Procédé selon l'une quelconque des revendications 1 à 3, **caractérisé en ce que** les éminences (2, 6) sont générées par une opération de laminage à froid et **en ce que** les éminences (2, 6) sont disposées sensiblement transversalement au sens de laminage (F).

6.  Procédé selon la revendication 5, **caractérisé en ce qu'**une cage quarto est utilisée, sur laquelle une paire de cylindres (51, 52) vient s'engrener, laquelle paire est formée par un cylindre de travail (52) présentant des éminences et des cavités et un cylindre de soutien (51) présentant des éminences et des cavités correspondantes.

7.  Procédé selon la revendication 3 et selon la revendication 5 ou 6, **caractérisé en ce que** la contre-ceinture (5) est découpée en morceaux, **en ce que** les morceaux sont rabattus de 180° et tournés de 90° par rapport au sens de laminage (F) et **en ce que** les éminences (2, 6) des deux ceintures (1, 5), qui se superposent alors en formant un angle (β) d'environ 90°, sont soudées entre elles.

8.  Procédé selon la revendication 7, **caractérisé en ce que**, à partir des morceaux de la contre-ceinture (5) et avant le soudage avec la première ceinture (1), on fabrique une nouvelle contre-tôle et une nouvelle contre-ceinture par un soudage à la façon des "Taylored blanks", en particulier à la façon du "soudage de bobine", et **en ce que** les éminences de la contre-ceinture nouvellement fabriquée vont dans le sens de laminage de la première tôle ou bande.

9.  Procédé selon l'une quelconque des revendications précédentes, **caractérisé en ce que** la distance 1 minimale mesurable entre deux des perles de soudure de liaison est de

$$0,1 \times \Delta S/C \times L \le 1 \le 0,3 \times \Delta S/C \times L,$$

L désignant une longueur recouverte par la bande ou la tôle de construction allégée, ΔS l'épaisseur de ceinture minimale qui apparaît et C l'espacement entre la fibre neutre du couple surfacique d'inertie de la coupe de la bande ou de la tôle de construction allégée et son bord extérieur de sangle.

10.  Procédé selon l'une quelconque des revendications précédentes, **caractérisé en ce que**, entre la première ceinture (1) et la contre-ceinture (5), on dispose avant le soudage une couche intermédiaire à base d'une masse qui présente une densité inférieure à 1 g/cm$^3$, qui est hydrophobe, ne moisit pas et s'évapore lors du soudage sans laisser pratiquement de résidu.

11.  Procédé selon la revendication 10, **caractérisé en ce que** la couche intermédiaire est principalement à base de cellulose imprégnée, qui a un apprêt hydrophobe.

12.  Procédé selon l'une quelconque des revendications précédentes, **caractérisé en ce que** sur la surface concernée de la bande ou de la tôle de construction allégée, qui formera par la suite le côté extérieur d'un composant fabriqué à partir de la bande ou de la tôle de construction allégée, on colle une bande ou tôle lisse qui, après la coupe de platine, est conformée à la bande ou tôle de construction allégée pour la géométrie finale de l'élément de construction.

13.  Procédé selon l'une quelconque des revendications précédentes, **caractérisé en ce que** la première ceinture (1) et la contre-ceinture (5) sont en acier et que les étapes de fabrication suivantes sont appliquées :

   a) laminage des éminences unilatérales,
   b) recuit,
   c) galvanisation électrolytique,
   d) superposition de la première ceinture avec la contre-ceinture en formant des points de croisement des éminences et en insérant une masse de remplissage dans les cavités qui se forment,

e) soudage des points de croisement d'éminences,

f) phosphatation et / ou chromacation, séchage, huilage,

g) mise en bobine ou pliage,

h) formage,

i) déshuilage, couche d'apprêt, laquage.

**14.** Procédé selon la revendication 13, **caractérisé en ce que** les éminences (2, 5) sont fabriquées dans l'étape a) par le laminage à chaud jusque dans la zone de ferrite et **en ce qu'**un recuit de recristallisation est effectué à l'étape b), en particulier sous gaz inerte ou sous vide.

**15.** Procédé selon l'une quelconque des revendications 13 ou 14, **caractérisé en ce que** les cavités se formant entre la première ceinture (1) et la contre-ceinture (5) sont remplies de façon incomplète, en particulier jusqu'à 80% de leur volume, par la masse de remplissage.

**16.** Procédé selon l'une quelconque des revendications 13 à 15, **caractérisé en ce que**, dans le cas où la bande de construction allégée est enlevée d'une bobine à l'étape de travail h, le formage est précédé de l'étape de travail du redreasage et est suivi des étapes de travail de la découpe de platine et du rognage.

**17.** Procédé pour fabriquer un élément de construction, dans lequel une bande ou une tôle de construction allégée est fabriquée par le procédé selon la revendication 2 et la ceinture lisse est sollicitée par traction dans l'état de montage.

**18.** Procédé pour fabriquer un élément de construction chargé sous flexion, dans lequel une tôle ou une bande de construction allégée est fabriquée par le procédé selon l'une quelconque des revendications 1 à 16 et la tôle ou bande de construction allégée forme la ceinturé de pression et la ceinture de traction est formée par une tôle équipée de nopes et soudée sur les pointes de nopes contre la tôle ou la bande de construction allégée.

Fig.1

EP 0 894 037 B1

Fig.2

Fig.3

EP 0 894 037 B1

100

Fig. 4